# EUROPÄISCHE PATENTSCHRIFT

(11) **EP 0 719 460 B1**
(45) Veröffentlichungstag und Bekanntmachung des Hinweises auf die Patenterteilung: **02.12.1998**
(21) Anmeldenummer: 94926052.5
(22) Anmeldetag: 14.09.1994
(51) Int. Cl.: H01M 12/08, H01M 2/02

(54) **SEITENBAUTEIL ZUR ABSTANDSPOSITIONIERUNG DER PLATTEN EINES PLATTENSTAPELS EINER ELEKTROCHEMISCHEN BATTERIE UND METHODE ZUR HERSTELLUNG EINER UNLÖSBAREN, FLUID- UND GASDICHTEN VERBINDUNG MIT DIESEN PLATTEN**
LATERAL COMPONENT FOR SPACING THE PLATES OF A STACK OF PLATES IN AN ELECTROCHEMICAL BATTERY AND PROCESS FOR ESTABLISHING A NONDETACHABLE, FLUID- AND GAS-TIGHT JUNCTION WITH SAID PLATES
COMPOSANT LATERAL D'ESPACEMENT DES PLAQUES FAISANT PARTIE D'UNE PILE DE PLAQUES DANS UNE BATTERIE ELECTROCHIMIQUE ET PROCEDE D'ETABLISSEMENT D'UNE LIAISON INDISSOLUBLE, ETANCHE AUX FLUIDES ET AUX GAZ AVEC CES PLAQUES

(30) Priorität: 17.09.1993 AT 1893/93
(43) Veröffentlichungstag der Anmeldung: 03.07.1996
(73) Patentinhaber: ELIN EBG Elektrotechnik GmbH, 4020 Linz (AT)
(72) Erfinder: TOMAZIC, Gerd, A-8680 Mürzzuschlag (AT)
(74) Vertreter: Rieberer, Stefan, Dipl.-Ing.
(86) Internationale Anmeldenummer: AT9400128
(87) Internationale Veröffentlichungsnummer: WO9508198

(56) Entgegenhaltungen:
- EP-A- 0 327 528
- PATENT ABSTRACTS OF JAPAN vol. 8, no. 268 (E-283) 7. Dezember 1984 & JP,A,59 138 068 (MEIDENSHA KK) 8. August 1984

## Beschreibung

Die Erfindung betrifft eine Methode zum Herstellen einer unlösbaren sowie fluid- und gasdichten Verbindung zwischen einem Plattenstapel und einem plattenförmigen Seitenbauteil einer elektrochemischen Batterie, sowie zur Abstandspositionierung dieses aus aufeinanderfolgenden dünnwandigen Elektrodenplatten mit jeweils dazwischen angeordneten Separatorplatten bestehenden Plattenstapels, wobei der Seitenbauteil aus elektrisch nichtleitendem Material besteht, sowie eine elektrochemische Batterie, insbesondere Zink-Brom-Batterie, mit einem plattenförmigen Seitenbauteil, welcher aus elektrisch nichtleitendem Material besteht.

Zink-Brom-Batterien sind aus bipolaren Elektrodenplatten aufgebaut, welche aus kunststoffgebundenem Kohlenstoff bestehen. Die einzelnen Elektrodenplatten werden durch ebene, aus Kunststoff gefertigte Separatorplatten getrennt. Indem die Elektrodenplatten und/oder Separatorplatten mit verstärkten Plastik-Seitenrändern hergestellt werden, ergeben sich jeweils zwischen Elektrodenplatten und Separatorplatten Elektrodenzwischenräume, konkret Anoden- und Katodenräume.

Die Elektrolyten, also Anolyt und Katolyt, werden als jeweils separate Kreisläufe geführt und über Querverteiltunnel in die Anoden- bzw. Katodenräume ein- und ausgeleitet. Für beide Elektrolyten-Kreisläufe ist jeweils ein eigener Elektrolyt-Vorratsbehälter samt Pumpe vorgesehen.

Wegen der hohen Reaktionsfähigkeit des Broms muß der chemischen Beständigkeit der verwendeten Kunststoffe spezielles Augenmerk gewidmet werden. Es ist gleichzeitig wichtig, daß die Stirnbereiche der Elektrodenplatten und Separatorplatten, welche den Abschluß der vorerwähnten Anoden- und Katodenräume bilden, sowohl fluid- als auch gasdicht verschlossen werden.
Ein weiteres Problem bei Brom-Zink-Batterien besteht darin, daß sich bei deren - durch die Aufeinanderschichtung einer Vielzahl von Elektrodenplatten und Separatorplatten entstandenen - Plattenstapeln die Toleranzen der Plattendicken summieren, so daß eine präzise Übereinstimmung mit den Eintritts- und Austrittsöffnungen für den Anschluß der den Elektrolyt fördernden Kreislaufsysteme, nach Abschluß der endgültigen Plattenpositionierung, schwer zu garantieren ist.

Es ist eine Methode bekannt, bei welcher die Stirnbereiche der Elektrodenplatten und Separatorplatten mitsammen verklebt werden.

In der Praxis hat sich jedoch gezeigt, daß mit dieser Methode keine Dichtheit gewährleistet werden kann.

Weiters wurde vorgeschlagen, die Verbindung der Stirnbereiche durch Schraubbefestigung eines mit einer Dichtung versehenen plattenförmigen Seitenteiles durchzuführen, wobei die Schrauben direkt in den Stirnseitenbereich greifen. Auch damit ist es, hauptsächlich aufgrund von Verwerfungen der Dichtung, nicht möglich, einen Austritt des Elektrolyten zu verhindern.

Ferner wird ein Verfahren angewandt, das darin besteht, einen plattenförmigen thermoplastischen Bauteil sowie die Stirnbereiche der Elektrodenplatten und Separatorplatten durch Kontakt mit einem Heizelement zu erwärmen und sodann den Bauteil an die Stirnseiten anzupressen. Die mit diesem Verfahren geschaffenen Verbindungen können die Fluid- und Gasdichte nur für einen sehr begrenzten Zeitraum garantieren.

Durch Extrudieren von Seitenwänden auf die aus Elektrodenplatten und Separatorplatten bestehenden Plattenstapel konnte zwar das Problem der Dichtheit verbessert werden; es ergibt sich jedoch der Nachteil, daß eine Verwerfung der Seitenränder und somit auch der Elektrodenplatten und Separatorplatten eintritt.

Weiters ist dabei nachteilig, daß nach Fertigstellung der extrudierten Seitenwände in einem weiteren Arbeitsgang Durchlaßöffnungen für den Anschluß der Elektrolytleitungen an die Anoden- und Katodenräume geschaffen werden müssen. Durch die beim Extrudieren entstandenen Verwerfungen der Stirnbereiche ist es nicht immer möglich, die Durchlaßöffnungen präzise genug zu plazieren, so daß es zu großen Materialausfällen kommt.
Die beim Extrudieren entstandenen Ungenauigkeiten der Plattenabstände wirken sich zudem in einer Verkürzung der Lebensdauer sowie in Abweichungen der ausgelegten Nennleistung und außerdem in einem schnelleren Leistungsabfall der Batterie aus.

Die Patentpublikation EP A 0 327 528 befaßt sich mit einer Metall-Halogen-Batterie, insbesondere mit einer Zink-Brom-Batterie. Diese Batterie weist eine Vielzahl von ebenen, gegebenenfalls bipolaren, Elektroden auf, zwischen denen ebene Separatoren angeordnet sind, die an ihren Rändern miteinander verbunden, insbesondere verschweißt, sind. Auf diese Weise sind Anoden- und Katodenräume jeweils mit zumindest einer Zu- und Abflußöffnung gebildet; durch diese Räume sind Elektrolytflüssigkeiten aus zwei Vorratsgefäßen mit voneinander getrennten Elektrolytkreisläufen leitbar. Dadurch weisen die Elektroden an ihren Randbereichen eine zumindest teilweise umlaufende Verjüngung, und die Separatoren an ihrem mit den Randbereichen der Elektroden anliegenden Randbereich eine zumindest teilweise umlaufende Verdickung auf. Dabei ist die größte Erstreckung der Verdickung des Separators größer als die kleinste Erstreckung der Verjüngung der Elektrode.

In den Patent Abstracts of Japan, vol. 8, no. 268 (E-268), 7 December 1984, befaßt sich ein Auszug mit der japanischen Patentschrift JP A 59 138 068. In diesem Auszug wird über die Herstellung einer Elektrodenplatte für eine Zink-Brom-Sekundärbatterie berichtet.
Dabei befinden sich eine erste und eine zweite Elektrode, welche aus zwei Metallnetzen bestehen, zwischen einer ersten und einer zweiten Kohlenstoff-Plastik-Platte. Eine erste Plastik-Platte, welche einen Mikrokanal bildet, sowie eine zweite Plastik-Platte, welche einen äußeren Rahmen bildet, sind an der Außenseite der ersten Kohlenstoff-Plastik-Platte angeordnet. Eine dritte Plastik-Platte, die aus demselben Material wie die zweite Plastik-Platte besteht, wird an der Außenseite der zweiten Kohlenstoff-Plastik-Platte angebracht. Anschließend werden die Platten mittels Erhitzung und Pressung miteinander verbunden. Auf diese Weise wird eine Elektrode für eine Zink-Brom-Sekundärbatterie geformt.
Infolge Erhitzung schmelzen die erste und die zweite Kohlenstoff-Plastik-Platte, das geschmolzene Material dringt in die Maschen des Metallnetzes ein; weiters werden die erste und die zweite Kohlenstoff-Plastik-Platte sowie die erste und die zweite Elektrode durch Druck miteinander verbunden. Damit wird der elektrische Widerstand zwischen den Platten verringert, und der Stromfluß zwischen den Elektroden verteilt sich gleichmäßig.
Der vorrangige Zweck dieser Erfindung besteht also darin, durch Verringerung des Innenwiderstandes einer Elektrodenplatte die Leistungsfähigkeit einer Zink-Brom-Sekundärbatterie zu erhöhen.

Aufgabe der Erfindung ist es, einen Seitenbauteil sowie eine Methode zu dessen Verbindung mit dem Plattenpaket zu erstellen, wodurch eine präzise Endpositionierung der Elektrodenplatten und Separatorplatten zueinander, sowie Fluid- und Gasdichtheit der Plattenstapel nach außen gewährleistet wird, sowie eine mit diesem Seitenbauteil versehene elektrochemische Batterie zu konzipieren.

Die Aufgabe wird durch die Erfindung gelöst. Diese ist dadurch gekennzeichnet, daß der Seitenbauteil in Abstand und parallel zu den jeweiligen Stirnseiten der Elektrodenplatten und Separatorplatten des Plattenstapels geführt wird und sodann der Bereich der Stirnseiten und gleichzeitig die dem Plattenstapel zugewandte Seite des Seitenbauteiles temporär einer Erwärmung der Oberfläche bis auf Schmelztemperatur ausgesetzt und anschließend bis zur Werkstofferkaltung gegeneinandergepreßt werden.

Dies ist vorteilhaft, weil dadurch der Hauptanteil an Kristallinität der thermoplastischen Werkstoffe erhalten bleibt.

In einer Ausgestaltung der Erfindung erfolgt die Erwärmung der dem Plattenstapel zugewandten Seite des Seitenbauteiles und des Bereiches der Stirnseiten der Elektrodenplatten und Separatorplatten mittels eines Fügeschweißverfahrens.

Der Vorteil, der sich daraus ergibt, ist die Möglichkeit, einer unkomplizierten Adaptierung allenfalls vorhandener Schweißgeräte zur Anwendung der erfindungsgemäßen Methode.

Eine Weiterbildung der Erfindung sieht vor, daß die Erwärmung der dem Plattenstapel zugewandten Seite des Seitenbauteiles und des Bereiches der Stirnseiten der Elektrodenplatten und Separatorplatten mittels des Spiegelschweißverfahrens erfolgt, wobei bis zur Erreichung der Schmelztemperatur die Stirnseiten und die dem Plattenstapel zugewandte Seite des Seitenbauteiles an einen temporär zwischen Seitenbauteil und Plattenstapel eingebrachten Heizspiegel angepreßt und anschließend, nach Entfernung des Heizspiegels, der Seitenbauteil und die Stirnseiten bis zur Werkstofferkaltung gegeneinandergepreßt werden.

Damit wird vorteilhafterweise die Verbindungsqualität zwischen Seitenbauteil und Plattenstapel weiter erhöht.

In einer speziellen Ausgestaltung der Erfindung erfolgt die Erwärmung des Seitenbauteiles und des Bereiches der Stirnseiten der Elektrodenplatten und Separatorplatten mittels des Spiegelschweißverfahrens, wobei bis zur Erreichung der Schmelztemperatur die Stirnseiten und die dem Plattenstapel zugewandte Seite des Seitenbauteiles von einem temporär und jeweils in Abstand zwischen Seitenbauteil und Plattenstapel eingebrachten Heizspiegel durch Strahlung erwärmt und anschließend, nach Entfernung des Heizspiegels, der Seitenbauteil und die Stirnseiten bis zur Werkstofferkaltung gegeneinandergepreßt werden.

Auf diese Weise kann eine besonders hohe Verbindungsqualität zwischen Seitenbauteil und Plattenstapel mit kurzen Herstellungszeiten kombiniert werden.

In einer besonderen Weiterbildung der Erfindung sind im Heizspiegel Ausnehmungen für die Positionierung der Ein- und Auslaßöffnungen der Positionierungsvorrichtung zu den Elektrodenräumen vorgesehen.

Damit wird vorteilhafterweise verhindert, daß die Ein- und Auslaßöffnungen zur weiteren Bearbeitung der Batterie vorbehandelt werden müssen.

Im Rahmen der Erfindung ist eine elektrochemische Batterie, insbesondere Zink-Brom-Batterie, mit einer unlösbaren sowie fluid- und gasdichten Verbindung zwischen einem Plattenstapel und einem plattenförmigen Seitenbauteil, sowie zur Abstandspositionierung dieses aus aufeinanderfolgenden dünnwandigen Elektrodenplatten mit jeweils dazwischen angeordneten Separatorplatten bestehenden Plattenstapels vorgesehen, wobei der Seitenbauteil aus elektrisch nichtleitendem Material besteht. Die Batterie ist erfindungsgemäß dadurch gekennzeichnet, daß der vorgesehene Seitenbauteil nach der Methode gemäß einem oder mehreren der Ansprüche 1 bis 5 hergestellt ist, vorzugsweise aus einem thermoplastischen Werkstoff besteht und eine den jeweilig verwendeten Elektrolyten berücksichtigende chemische Beständigkeit aufweist.

Mit dieser erfindungsgemäßen Weiterbildung ist es möglich, die Lebensdauer von Batterien der genannten Art enorm zu verlängern. Zudem kann die Einhaltung der angegebenen Nenndaten garantiert werden.

In einem Ausführungsbeispiel soll die Erfindung näher erläutert werden, und zwar anhand einer Kombinationsversion, bei welcher eine Batterie It. Anspruch 6 mittels der Methodenvariante It. Anspruch 4 mit dem Plattenstapel verbunden wird. Dabei zeigt die Fig., vermittels dreier Fertigungsphasen A, B, C das Prinzip der Erfindung, welche es erlaubt, eine fluid- und gasdichte Verbindung zwischen dem Seitenbauteil und dem Plattenstapel herzustellen.

Wie aus der Fig. ersichtlich, ist in der Fertigungsphase A einem aus einer Vielzahl von Elektrodenplatten und Separatorplatten 4 bestehenden Plattenstapel 1 in Abstand und parallel zu den Stirnseiten 5 der Platten 4 der erfindungsgemäße Seitenbauteil 3 angeordnet. Oberhalb des Zwischenraumes von Seitenbauteil 3 und Plattenstapel 1 befindet sich ein Heizspiegel 2, dessen Heizung zu diesem Zeitpunkt noch nicht eingeschaltet ist.
Fertigungsphase B zeigt den abgesenkten, sich bereits in Abstand und parallel zum Plattenstapel 1 - konkret: zu den Stirnseiten 5 der Elektrodenplatten und Separatorplatten 4 - und dem Seitenbauteil 3 befindlichen Heizspiegel 2. In dieser Phase der Fertigung ist der Heizspiegel bereits eingeschaltet. Die Bereiche der Stirnseite 5 der Elektrodenplatten und Separatorplatten 4, ebenso wie die dem Plattenstapel 1 zugewandte Seite des Seitenbauteiles 3 werden nun mittels Infrarotstrahlung erwärmt. Die Erwärmungsphase dauert lediglich so lange an, bis eine ausreichende - geringe - Schicht der Oberfläche des Seitenbauteiles 3 und des Bereiches der Stirnseiten 5 aufgeschmolzen ist. Sodann wird der Heizspiegel 2 hochgezogen, die Heizung abgeschaltet und die aufgeschmolzenen Oberflächenschichten von Seitenbauteil 3 und Stirnseiten 5 gegeneinandergepreßt. Bei speziellen Ausführungen von Heizspiegeln und zugehörigen Spiegel-Absenkvorrichtungen ist es selbstverständlich auch möglich, wegen der kurzen Taktzeiten den Fertigungsvorgang ohne jeweiliges Aus- und Einschalten der Heizung durchzuführen.

Phase C der Fertigung zeigt den an den Stirnseiten 5 der Platten 4 unlöslich sowie fluid- und gasdicht haftenden Seitenbauteil 3. Während der sogenannten Fügezeit, die sich aus Anpreßzeit und Abkühlzeit zusammensetzt, entstand eine Verbindung der thermoplastischen Teile, in welcher der Hauptanteil an Kristallinität erhalten blieb; dies bedeutet eine Qualitätsgarantie sowohl für die mechanische Festigkeit als auch für die Fluid- und Gasdichte der geschaffenen Verbindung.

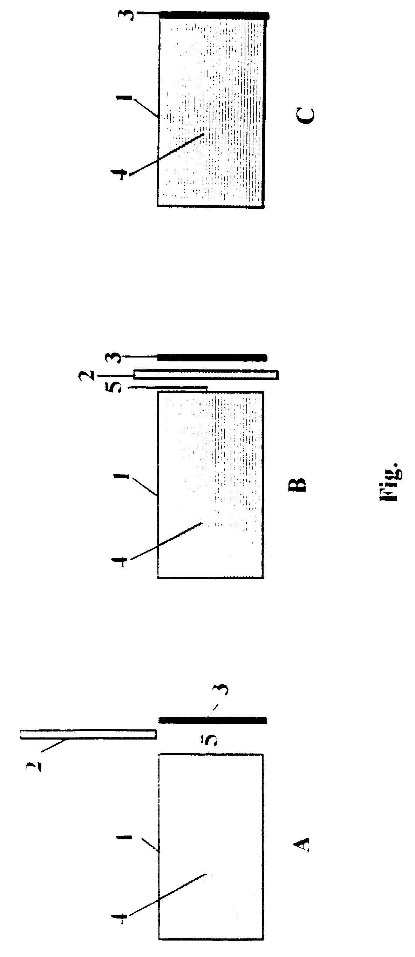

## Patentansprüche

1. Methode zum Herstellen einer unlösbaren sowie fluid- und gasdichten Verbindung zwischen einem Plattenstapel (1) und einem plattenförmigen Seitenbauteil (3) einer elektrochemischen Batterie, sowie zur Abstandspositionierung dieses aus aufeinanderfolgenden dünnwandigen Elektrodenplatten mit jeweils dazwischen angeordneten Separatorplatten (4) bestehenden Plattenstapels (1), wobei der Seitenbauteil (3) aus elektrisch nichtleitendem Material besteht, **dadurch gekennzeichnet,** daß der Seitenbauteil (3) in Abstand und parallel zu den jeweiligen Stirnseiten (5) der Elektrodenplatten und Separatorplatten (4) des Plattenstapels (1) geführt wird und sodann der Bereich der Stirnseiten (5) und gleichzeitig die dem Plattenstapel (1) zugewandte Seite des Seitenbauteiles (3) temporär einer Erwärmung der Oberfläche bis auf Schmelztemperatur ausgesetzt und anschließend bis zur Werkstofferkaltung gegeneinandergepreßt werden.

2. Methode zum Herstellen einer unlösbaren sowie fluid- und gasdichten Verbindung nach Anspruch 1, **dadurch gekennzeichnet,** daß die Erwärmung der dem Plattenstapel (1) zugewandten Seite des Seitenbauteiles (3) und des Bereiches der Stirnseiten (5) der Elektrodenplatten und Separatorplatten (4) mittels eines Fügeschweißverfahrens erfolgt.

3. Methode zum Herstellen einer unlösbaren sowie fluid- und gasdichten Verbindung nach Anspruch 2, **dadurch gekennzeichnet,** daß die Erwärmung der dem Plattenstapel (1) zugewandten Seite des Seitenbauteiles (3) und des Bereiches der Stirnseiten (5) der Elektrodenplatten und Separatorplatten (4) mittels des Spiegelschweißverfahrens erfolgt, wobei bis zur Erreichung der Schmelztemperatur die Stirnseiten (5) und die dem Plattenstapel (1) zugewandte Seite des Seitenbauteiles (3) an einen temporär zwischen Seitenbauteil (3) und Plattenstapel (1) eingebrachten Heizspiegel (2) angepresst und anschließend, nach Entfernung des Heizspiegels (2), der Seitenbauteil (3) und die Stirnseiten (5) bis zur Werkstofferkaltung gegeneinandergepreßt werden.

4. Methode zum Herstellen einer unlösbaren sowie fluid- und gasdichten Verbindung nach Anspruch 2, **dadurch gekennzeichnet,** daß die Erwärmung des Seitenbauteiles (3) und des Bereiches der Stirnseiten (5) der Elektrodenplatten und Separatorplatten (4) mittels des Spiegelschweißverfahrens erfolgt, wobei bis zur Erreichung der Schmelztemperatur die Stirnseiten (5) und die dem Plattenstapel (1) zugewandte Seite des Seitenbauteiles (3) von einem temporär und jeweils in Abstand zwischen Seitenbauteil (3) und Plattenstapel (1) eingebrachten Heizspiegel (2) durch Strahlung erwärmt und anschließend, nach Enffernung des Heizspiegels (2), der Seitenbauteil (3) und die Stirnseiten (5) bis zur Werkstofferkaltung gegeneinandergepreßt werden.

5. Methode zum Herstellen einer unlösbaren sowie fluid- und gasdichten Verbindung nach Anspruch 4, **dadurch gekennzeichnet,** daß im Heizspiegel (2) Ausnehmungen für die Positionierung der Ein- und Auslaßöffnungen der Positionierungsvorrichtung zu den Elektrodenräumen vorgesehen sind.

6. Elektrochemische Batterie, insbesondere Zink-Brom-Batterie, mit einer unlösbaren sowie fluid- und gasdichten Verbindung zwischen einem Plattenstapel (1) und einem plattenförmigen Seitenbauteil (3), sowie zur Abstandspositionierung dieses aus aufeinanderfolgenden dünnwandigen Elektrodenplatten mit jeweils dazwischen angeordneten Separatorplatten (4) bestehenden Plattenstapels (1), wobei der Seitenbauteil (3) aus elektrisch nichtleitendem Material besteht, **dadurch gekennzeichnet,** daß der vorgesehene Seitenbauteil (3) nach der Methode gemäß einem oder mehreren der Ansprüche 1 bis 5 hergestellt ist, vorzugsweise aus einem thermoplastischen Werkstoff besteht und eine den jeweilig verwendeten Elektrolyten berücksichtigende chemische Beständigkeit aufweist.

## Claims

1. A process for establishing a non-detachable, fluid and gas tight junction between a stack of plates (1) and a plate-shaped lateral component (3) of an electrochemical battery, and for spaced positioning of this stack of plates (1) consisting of successive thin-walled electrode plates and separating plates (4) respectively arranged in-between, said lateral component (3) consisting of electrically non-conductive material, **characterised** in that the lateral component (3) is guided in spaced relationship and parallel to the respective front sides (5) of said electrode plates and separating plates (4) of said stack of plates (1), and then the region of said front sides (5) and, concurrently, that side of said lateral component (3) which faces said stack of plates (1) are exposed temporarily to heating the surface up to melting temperature, after which they are pressed against each other until the material has cooled down.

2. Process for establishing a non-detachable, fluid and gas tight junction according to claim 1, **characterised** in that heating of that side of said lateral component (3) which faces said stack of plates (1) and said region of said front sides (5) of said electrode plates and separating plates (4) is done by means of a junction welding method.

3. Process for establishing a non-detachable, fluid and gas tight junction according to claim 2, **characterised** in that heating of that side of said lateral component (3) which faces said stack of plates (1) and said region of said front sides (5) of said electrode plates and separating plates (4) is done by means of a butt-welding method, wherein said front sides (5) and that side of said lateral component (3) which faces said stack of plates (1) are pressed, up to reaching the melting temperature, to a heat reflector (2) introduced temporarily between said lateral component (3) and said stack of plates (1) after which, said heat reflector (2) having been removed, the lateral component (3) and said front sides (5) are pressed against each other until the material has cooled down.

4. Process for establishing a non-detachable, fluid and gas tight junction according to claim 2, **characterised** in that heating of said lateral component (3) and said region of said front sides (5) of said electrode plates and separating plates (4) is done by means of a butt-welding method, wherein said front sides (5) and that side of said lateral component (3) which faces said stack of plates (1) are heated up to reaching the melting temperature by radiation via a heat reflector (2) introduced in spaced relationship temporarily between said lateral component (3) and said stack of plates (1) after which, said heat reflector having been removed, the lateral component (3) and said front sides (5) are pressed against each other until the material has cooled down.

5. Process for establishing a non-detachable, fluid and gas tight junction according to claim 4, **characterised** in that recesses for positioning inlet and outlet openings of a positioning device to the electrode spaces are provided in said heat reflector (2).

6. An electrochemical battery, particularly a zinc-bromine battery, comprising a non-detachable, fluid and gas tight junction between a stack of plates (1) and a plate-shaped lateral component (3), and for spaced positioning of this stack of plates (1) consisting of successive thin-walled electrode plates and separating plates (4) respectively arranged in-between, said lateral component (3) consisting of electrically non-conductive material, **characterised** in that the lateral component (3) provided is established according to the process of one or more of claims 1 to 5, consists preferably of a thermoplastic material and has a chemical resistance considering the respective electrolyte used.

## Revendications

1. Procédé de fabrication d'une liaison indissoluble ainsi qu'étanche aux fluides et aux gaz, entre une pile de plaques (1) et un composant latéral (3) se présentant sous forme de plaque, d'une batterie électrochimique, ainsi que de positionnement espacé de cette pile de plaques (1) constituée de plaques d'électrode à paroi mince se succédant, ayant chaque fois des plaques séparatrices (4) placées en position intermédiaire, le composant latéral (3) étant constitué d'un matériau non conducteur de l'électricité, caractérisé en ce que le composant latéral (3) est guidé à distance et parallèlement aux faces frontales (5) respectives des plaques d'électrode et des plaques de séparateur (4) de la pile de plaques (1), et ensuite la zone des faces frontales (5) et, simultanément, la face, tournée vers la pile de plaques (1), du composant latéral (3), étant temporairement exposées à un échauffement de la surface jusqu'à la température de fusion, puis pressées les unes contre les autres jusqu'au refroidissement du matériau.

2. Procédé de fabrication d'une liaison indissoluble ainsi qu'étanche aux fluides et aux gaz selon la revendication 1, caractérisé en ce que le chauffage de la face tournée vers la pile de plaques (1) du composant latéral (3) et de la zone des faces frontales (5) des plaques d'électrode et des plaques séparatrices (4) s'effectue au moyen d'un procédé de soudage de joints.

3. Procédé de fabrication d'une liaison indissoluble ainsi qu'étanche aux fluides et aux gaz selon la revendication 2, caractérisé en ce que le chauffage de la face, tournée vers la pile de plaques (1), du composant latéral (3) et de la zone des faces frontales (5) des plaques d'électrode et des plaques séparatrices (4), s'effectue au moyen du procédé par soudage en bout à l'aide de réflecteurs, où, jusqu'à l'atteinte de la température de fusion, les faces frontales (5) et la face, tournée vers la pile de plaques (1), du composant latéral (3) sont pressées sur un réflecteur de chauffage (2) introduit temporairement entre le composant latéral (3) et la pile de plaques (1), et ensuite, après enlèvement du réflecteur de chauffage (2), le composant latéral (3) et les faces frontales (5) sont comprimés les uns contre les autres jusqu'au refroidissement du matériau.

4. Procédé de fabrication d'une liaison indissoluble ainsi qu'étanche aux fluides et aux gaz selon la revendication 2, caractérisé en ce que le chauffage du composant latéral (3) et de la zone des faces frontales (5) est effectué au moyen du procédé par soudage en bout à l'aide de réflecteurs, où jusqu'à l'atteinte de la température de fusion, les faces frontales (5) et la face, tournée vers la pile de plaques (1), du composant latéral (3), sont chauffées par rayonnement par un réflecteur de chauffage (2) introduit temporairement et chaque fois à distance entre le composant latéral (3) et la pile de plaques (1), et ensuite, après enlèvement du réflecteur de chauffage (2), le composant latéral (3) et les faces frontales (5) sont pressés les uns contre les autres jusqu'au refroidissement du matériau

5. Procédé de fabrication d'une liaison indissoluble ainsi qu'étanche aux fluides et aux gaz selon la revendication 2, caractérisé en ce que dans le réflecteur de chauffage (2) sont prévus des évidements, destinés au positionnement des ouvertures d'entrée et de sortie du dispositif de positionnement vis-à-vis des espaces d'électrode.

6. Batterie électrochimique, en particulier batterie au zinc-brome, dotée d'une liaison indissoluble, ainsi qu'étanche aux fluides et aux gaz entre une pile de plaques (1) et un composant latéral (3) se présentant sous la forme de plaque, ainsi que pour le positionnement espacé de cette pile de plaques (1) constituée de plaques d'électrode à paroi mince se succédant, avec chaque fois des plaques séparatrices (4) placées en position intermédiaire, le composant latéral (3) étant constitué d'un matériau non conducteur de l'électricité, caractérisée en ce que le composant latéral (3) prévu est fabriqué suivant le procédé selon l'une ou plusieurs des revendications 1 à 5, de préférence à partir d'un matériau thermoplastique et présente un résistance chimique prenant en compte l'électrolyte chaque fois utilisée.
